# NEUE EUROPÄISCHE PATENTSCHRIFT

(11) **EP 1 013 956 B2**
(45) Veröffentlichungstag und Bekanntmachung des Hinweises auf die Entscheidung über den Einspruch: **25.03.2009**
(45) Hinweis auf die Patenterteilung: 28.09.2005
(21) Anmeldenummer: 99121538.5
(22) Anmeldetag: 29.10.1999
(51) Int. Cl.: F16D 65/12, F16D 69/00

(54) **Bremseinheit**
Brake unit
Unité de freinage

(30) Priorität: 23.12.1998 DE 19859840
(43) Veröffentlichungstag der Anmeldung: 28.06.2000
(73) Patentinhaber: Daimler AG, 70327 Stuttgart (DE)
(72) Erfinder: Näumann, Emil, 73061 Ebersbach (DE); Rebstock, Kolja, Dr., 89073 Ulm (DE); Riedel, Hans-Georg, 75177 Pforzheim (DE); Röss, Karl-Heinz, 73061 Ebersbach (DE); Wolfsried, Stephan, 71334 Waiblingen (DE)

(56) Entgegenhaltungen:
- EP-A- 0 474 877
- EP-A- 0 849 485
- EP-A1- 0 987 460
- WO-A-97/38235
- WO-A-97/41368
- DE-A- 19 706 925
- DE-A- 19 708 696
- DE-A1- 3 721 718
- DE-A1- 4 338 593
- DE-A1- 19 711 830
- DE-C1- 19 711 829
- DE-U- 29 710 533
- DE-U1- 8 801 591
- US-A- 5 325 941
- US-A- 5 612 110
- "Anodische Oxidation", F.A. Brockhaus 2002
- "Kompressibilität", F.A. Brockhaus 2002

## Beschreibung

Die vorliegende Erfindung betrifft eine Bremseinheit aus mindestens einer Bremsscheibe und mindestens einer Bremsbacke mit mindestens einem Reibbelag, wobei die Bremse eine Bremsscheibe mit einem Bremsscheibenrotor aus einem Metall-Keramik-Verbundwerkstoff (CMC), dessen äußere Fläche bzw. Flächen zumindest teilweise eine Reibfläche für den mindestens einen Reibbelag bilden, und einen Bremsscheibentopf aufweist, welcher mittels einem oder mehreren Befestigungselementen an der Bremsscheibe befestigt ist.

Bei Hochleistungsbremseinheiten, sowohl für Kraftfahrzeuge als auch für Schienenfahrzeuge, werden ausgezeichnete Bremseigenschaften, hoher Bremskomfort und gleichzeitig eine möglichst lange Lebensdauer gefordert. Die konventionellen Bremseinheiten mit Eisenguß-Bremsscheiben haben jedoch vergleichsweise ungünstige Verschleißraten beim Bremsbetrieb. Dabei ist insbesondere für Hochleistungsbremseinheiten neben dem bremsbedingten Verschleiß der sogenannte "Streichelverschleiß" von Bedeutung, welcher Formfehler am Bremsscheibenrotor erzeugt und Rubbelerscheinungen begünstigt, somit also den Bremskomfort nachteilig beeinflußt. Den gleichen Effekt zeigt der bei großer Beanspruchung des Bremsscheibenrotors und den dabei auftretenden hohen Temperaturen zu beobachtende thermische Verzug des Bremsscheibenrotors. Schließlich sind die bisher üblich Eisenguß-Scheiben nicht für extrem hohe Bremsbelastungen ausgelegt, da in diesem Fall Wärmespannungsrisse an der Reibfläche auftreten, welche die Reibfläche unbrauchbar machen. Bisher können diese Fehler nur über den - kostenintensiven - Austausch der betroffenen Bremsscheiben behoben werden.

Ein weiterer häufiger Grund für den kostenintensiven Austausch von Bremsscheiben sind Korrosionsschäden an den Bremsscheibenrotoren. Insbesondere sog. "Standflecken", die bei längerem Stand des Fahrzeugs auftreten können, führen zu Rubbelschwingungen, die den Bremskomfort beeinträchtigen und die Bremsleistungen verringern.

Ferner können bei Bremseinheiten mit konventionellen Eisenguß-Bremsscheiben unangenehme, hochfrequente Töne im Bereich von etwa 1500 bis 6500 Hertz auftreten, die einen Austausch der Bremsscheibe notwendig machen.

Mit der Entwicklung von Bremsscheiben bzw. Reibflächen von Bremsscheiben aus Keramik-Metall-Verbundwerkstoffen (CMC-Bremsschei-ben) hoffte man, diese Nachteile beheben zu können. Aus der DE 43 22 113 ist bspw. eine Bremsscheibe für Scheibenbremsen, insbesondere als Wellen- oder Achsbremsscheibe von Schienenfahrzeugen, bekannt, welche einen metallischen Tragkörper aufweist, welcher je Reibringfläche mit einer Schicht versehen ist, die aus mikro- oder makroskopisch aufgegliederten Bereichen aus wenigsten zwei unterschiedlichen Werkstoffen gebildet ist, wobei der eine Bereich aus einem Keramikwerkstoff und der andere Bereich aus einem Metall-, Metallsinter- oder Metallkeramiksinterwerkstoff gebildet ist. Abgesehen von der aufwendigen Fertigung einer solchen mehrteiligen Bremsscheibe ist damit das Problem der Verschleißdauer und des Bremskomforts einer Bremseinheit, insbesondere für Kraftfahrzeuge, aber auch für Schienenfahrzeuge nicht gelöst.

Aus der DE 196 23 425 A1 ist eine reaktionsgebundene Keramik für keramische Verbundwerkstoffe bekannt, die Mullit als Hauptbestandteil sowie Korund und Thortveitit oder Cerianit als Nebenbestandteile bekannt, die im wesentlichen als thermisches Schutzmaterial eingesetzt werden. Über das Problem des Bremskomforts und der Lebensdauer von Bremseinheiten wird nichts gesagt.

Aus der DE 42 37 655 A1 ist schließlich eine Bremsscheibe für die Scheibenbremse eines Kraftfahrzeugs bekannt, die einen inneren und einen äußeren Reibring aufweist, zwischen denen Kühlkanäle angeordnet sind. Der äußere Reibring besteht aus einem Faserverbundwerkstoff und der innere Reibring aus einem Graugußwerkstoff. Beide Reibringe sind fest miteinander verbunden. Entsprechend kann auch das Material der Reibflächen der Bremsbacken an das Material der Reibflächen der Bremsscheibe angepaßt werden. Daraus resultiert zwar ein verbessertes Reibwertverhalten und eine Verringerung der Reibschwingungen der Bremsscheibe. Die Herstellung mehrteiliger Bremsscheiben mit unterschiedlichen Reibbelägen der Bremsbacken ist jedoch sehr aufwendig. Außerdem wird auch hier nichts über die Lebensdauer der Bremseinheit ausgesagt.

Die gattungsbildende DE 297 10 533 U1 beschreibt eine Wellen- bzw. Radbremsscheibe für Schienenfahrzeuge, die aus einem CMC-Material besteht und über eine Nabe an einer Radachse angebunden ist. Bei dem CMC-Werkstoff handelt es sich um einen kohlenstofffaserverstärkten Siliziumkarbid-Werkstoff.

Aufgabe der vorliegenden Erfindung ist es daher, eine Bremseinheit der o.g. Art bereitzustellen, welche großen Bremskomfort und lange Lebensdauer aufweist und dennoch einfach und kostengünstig herstellbar ist.

Diese Aufgabe wird durch die Merkmale des Anspruchs 1 gelöst.

Bei Verwendung von Reibflächen aus Keramik-Metall-Verbundwerkstoff in Bremsscheibenrotoren bzw. Bremsscheibenrotoren aus Keramik-Metall-Verbundwerkstoff in Verbindung mit Reibbelägen mit einem Reibwert von etwa 0,3 bis 0,5 und einer korrosionsinhibierenden Anbindung des Bremsscheibentopfes an den Bremsscheibenrotor lassen sich sowohl der Bremskomfort als auch die Lebensdauer der erfindungsgemäßen Bremseinheit gegenüber herkömmlichen Bremseinheiten signifikant verlängern. Verschiedenste Verschleißuntersuchungen am Prüfstand und im Fahrzeug haben gezeigt, daß Lebensdauerwerte von etwa 8 bis 10 Jahren bzw. 200 000 bis 300 000 km problemlos erreicht werden können, weil die Verschleißraten beim Bremsbetrieb um Größenordnungen günstiger liegen als bei der heute verbreiteten Technologie mit Eisenguß-Scheiben. Darüber hinaus werden die vom "Streichelverschleiß" herrührenden Verschleißbeträge soweit reduziert, daß die Formfehlerbildung keine Rolle mehr spielt. Damit treten praktisch keine Rubbelerscheinungen mehr auf, so daß der Bremskomfort dadurch nicht mehr nachteilig beeinflußt wird. Hinzu kommt, daß ein thermischer Verzug des Bremsscheibenrotors bei Temperaturen bis zu 1200°C nicht mehr beobachtet werden und auch Wärmespannungsrisse in der Reibfläche nicht mehr auftreten, so daß kein vorzeitiger Bremsscheibenwechsel mehr nötig wird.

Umfangreiche Korrosionstests haben gezeigt, daß die korrosionsfreie Anbindung der CMC-Bremsscheibe an den Bremsscheibentopf die Korrosion an der Bremsscheibe, insbesondere die "Standflecken", wirkungsvoll verhindert werden kann. Schließlich treten bei Verwendung von CMC-Bremsscheiben, bedingt durch die vorteilhaften Materialeigenschaften der Keramik-Metall-Verbundwerkstoffe, nämlich des hohen sog. "Leerschen Dämpfungsmaßes" die störenden Geräusche bei 1500 bis 6500 Hertz nicht mehr auf. Auch diese bisher bekannten Gründe für einen vorzeitigen Bremsscheibenwechsel entfallen somit.

Zusammenfassend ist festzustellen, daß mit der erfindungsgemäßen Kombination von Bremsscheibenrotor aus Keramik-Metall-Verbundwerkstoff, korrosionsoptimierter Anbindung des Bremsscheibentopfes an die Bremsscheibe sowie geeigneter Reibbeläge eine Lebensdauer der erfindungsgemäßen Bremseinheit erreicht werden kann, innerhalb derer die erfindungsgemäße Bremseinheit korrosionsfrei betrieben werden kann, die den bisher bekannten Bremseinheiten überlegen ist, obwohl bspw. im Material der Bremsscheibe freier Kohlenstoff vorhanden ist. Damit werden Betriebskosten, Verfügbarkeit und Kundenzufriedenheit gegenüber dem derzeit bekannten Stand der Technik erheblich verbessert.

Eine vorteilhafte Weiterbildung der vorliegenden Erfindung sieht vor, daß die Reibfläche des Bremsscheibenrotors eine Oberflächenrauhigkeit Rz von etwa 2 bis 15 µm aufweist. In Kombination mit der typischen Härte für Verbundwerkstoffe von etwa 1600 bis 2500 HV 0,5 (nach DIN 50133) ergibt sich daraus eine besonders hohe Belastbarkeit und Verschleißfestigkeit der erfindungsgemäßen Bremseinheit. Dabei besteht zumindest die Reibfläche des Bremsscheibenrotors oder der gesamte Bremsscheibenrotor oder die gesamte Bremsscheibe aus einem Silizium-Keramik-Verbundwerkstoff auf der Basis von Siliziumcarbid, welcher als Verstärkungsfasern Kohlefasern aufweist.

Gemäss der vorliegenden Erfindung sind isotrop orientierte Kurzfassen gewählt (ygl. die DE 197 11 829 C1), so daß die Reibfläche bzw die Bremsscheibe sowohl in Längs- als auch in Querrichtung isotrope, d. h. gleichmaßige Eigenschaften aufweist.

Der Verbundwerkstoff weist als Keramik-Komponente eine Siliziumcarbid-Keramik auf.

Die Reibfläche des Bremsscheibenrotors und der Bremsscheibenrotor sind vorzugsweise einstückig ausgebildet sind und bestehen aus demselben Material, also aus einem CMC-Material. Besonders bevorzugt ist es, die gesamte Bremsscheibe einstückig aus einem CMC-Material herzustellen, was die Fertigung besonders einfach und kostengünstig macht.

Eine besonders hohe Lebensdauer erreicht man dadurch, daß der mindestens eine Reibbelag eine Kompressibilität von mindestens etwa 1 µm/bar Bremsflüssigkeit aufweist.

Geeignete Reibbeläge sind solche mit organischer Bindung, welche in an sich bekannter Weise einer spezielle Wärmebehandlung unterzogen wurden, um den für CMC-Bremsen typischen höheren Reibflächentemperaturen standzuhalten.

Diese Anpassung der Reibbeläge trägt auch dazu bei, Wärmespannungsrisse in der Reibfläche der Bremsscheibenrotoren zu vermeiden.

Der Bremsscheibentopf ist vorzugsweise schwimmend an die Bremsscheibe angebunden, was für eine zusätzliche Dämpfung im Bereich von 1500 bis 6500 Hertz sorgt. Auch die soeben beschriebene Anpassung der Reibbeläge trägt zu dieser Dämpfung bei. Die korrosionsinhibierende Anbindung des Bremsscheibentopfes an die Bremsscheibe wird dadurch bewirkt ist, daß der Bremsscheibentopf aus einem rostfreien Material, aus, anodisiertem Aluminium gebildet ist. Dabei dient anodisiertes Aluminium gleichzeitig als Schutz- und Reibschicht für innenliegende Trommelbremsen.

Zusätzlich wird die korrosionsinhibierende Anbindung dadurch bewirkt, daß die Befestigungselemente ganz oder teilweise aus einem rostfreien Material, vorzugsweise V2A-Stahl gebildet sind.

Die Befestigungselemente sind bspw. als axiale Scheibensicherungselemente in Form von Schrauben, Nieten, Stiften u. dgl. ausgebildet. Der Bremsscheibentopf weist vorzugsweise ein röhrenförmiges Befestigungssegment auf, welches in entsprechende in der Bremsscheibe vorgesehene Aufnahmebohrungen eingesteckt ist und die axialen Scheibensicherungselemente aufnimmt.

Die axialen Scheibensicherungselemente können ferner Unterlegscheiben o. dgl. aus einem rostfreien Material, bspw. V2A-Stahl, anodisiertem Aluminium, hochlegiertem, schmiedbarem Nirostastahl, faserverstärkter Keramik oder faserverstärktem Glas aufweisen, welche zusätzlich korrosionsinhibierend wirken.

Die Aufnahmebohrungen können ferner mit wärmedämmenden Hülsen, bspw. aus Keramik, faserverstärkter Keramik, Kunststoff, faserverstärktem Kunststoff oder faserverstärktem Glas ausgekleidet sein, um eine Wärmeübertragung von den temperaturbelasteten Bremsscheibenrotoren zu den Befestigungselementen bzw. dem Bremsscheibentopf zu vermeiden.

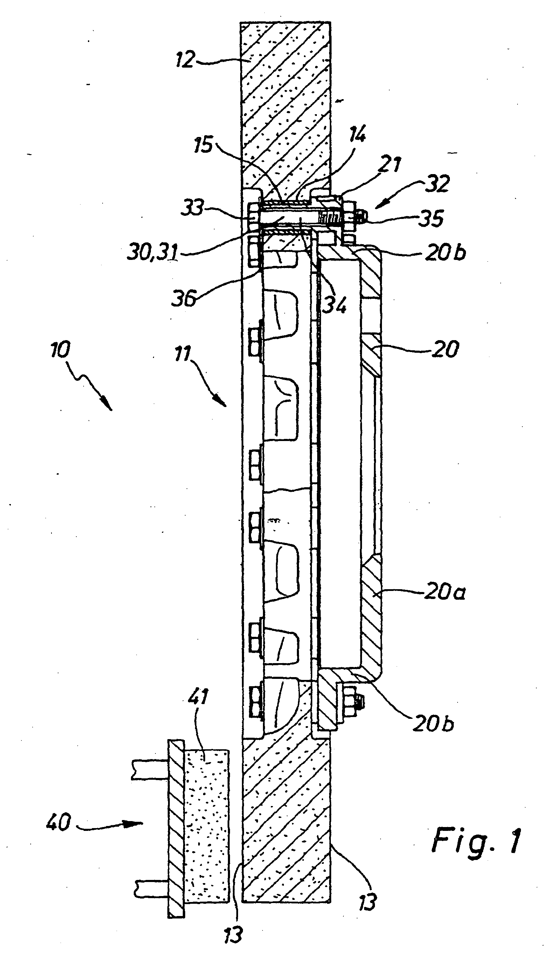

Ein Ausführungsbeispiel der vorliegenden Erfindung wird im folgenden anhand der beiliegenden Zeichnung näher beschrieben. Die einzige Figur zeigt eine schematische, nicht maßstabsgetreue, teilweise geschnittene Darstellung eines Ausführungsbeispiels einer erfindungsgemäßen Bremseinheit (10) aus einer Bremsscheibe (11) und Bremsbacken (40) mit Reibbelägen (41). Die Bremsscheibe (11) weist einen Bremsring oder Bremsscheibenrotor (12) auf. Die äußeren Flächen des Bremsscheibenrotors (12) dienen als Reibflächen (13) für die Reibbeläge (41) der Bremsbacken (40). Zumindest die Reibfläche (13), vorzugsweise jedoch die ganze Bremsscheibe (10) besteht aus einem Keramik-Metall-Verbundwerkstoff; im Ausführungsbeispiel in der Zusammensetzung mit etwa 10 bis 55 Gew.-% Siliziumcarbid, etwa 30 bis 78 Gew.-% Carbonfasern oder Siliziumcarbidfasern, als isotrop orientierte Kurzfasern und etwa 0 bis 25 Gew.-% Silizium. Die Härte liegt im Bereich von etwa 1600 bis 2500 HV 0,5 nach DIN 50133, die Oberflächenrauhigkeit Rz beträgt etwa 2 bis 15 µm.

An der Bremsscheibe (11) ist ein Adapter oder Bremsscheibentopf (20) befestigt, vorzugsweise in der in der Figur gezeigten "schwimmenden" Anbindung. Der Bremsscheibentopf (20) weist eine runde, im wesentlichen ebene Grundfläche (20a) sowie eine umlaufende Kante (20b) auf. An die umlaufende Kante (20b) schließen sich mit der Kante (20b) einstückige Befestigungssegmente (21) an, von denen eines im Querschnitt dargestellt ist. Man erkennt, daß das Befestigungssegment (21) in etwa röhrenförmig ist und in eine entsprechende Aufnahmebohrung (14) in der Bremsscheibe (10) eingesteckt ist. Die Aufnahmebohrung (14) ist mit einer Wärmedämmhülse (15) ausgekleidet, die aus einem Material mit einer niedrigen Wärmeleitfähigkeit, bspw. aus einem keramischen Material wie Aluminiumoxid oder Siliziumcarbid besteht.

Im röhrenförmigen Befestigungselement (21) ist ein Befestigungselement (30) aufgenommen, welches im Ausführungsbeispiel ein axiales Scheibensicherungselement (31) ist, bspw. in Form eines Niets, einer Schraube oder eines Stifts. In der Figur handelt es sich um eine Schraube (32) mit einem Kopf (33) und einem Schaft (34), welcher an seinem vom Kopf (33) entfernten Ende von einer Mutter (35) fixiert ist. Zwischen der Mutter (35) und dem Befestigungssegment (21) kann noch eine Unterlegscheibe (36) vorgesehen sein, welche ebenfalls aus einem korrosionsinhibierenden Material, bspw. einem keramischen Material, faserverstärktem Glas oder faserverstärkter Glaskeramik, bestehen kann.

Der Bremsscheibentopf (20) und vorzugsweise die Verbindungselemente (31) sind in einem rostfreien Material gehalten, aus, anodisiertem Aluminium.

Die Reibbeläge (41) der Bremsbacken (40) sind aus organisch gebundenem Material, welches durch Wärmebehandlung temperaturbeständig gemacht wurde. Wichtig ist ein Reibwert von etwa 0,3 bis 0,5, vorzugsweise verbunden mit einer Kompressibilität von etwa 1 µm/bar Bremsflüssigkeitsdruck.

Mit den erfindungsgemäßen Bremseinheiten können dank der erfindungsgemäßen Kombination von Material der Reibfläche, Material der Bremsbeläge und korrosionsinhibierender Anbindung eine Lebensdauer von etwa mindestens 8 bis 10 Jahren bzw. Laufleistungen von mindestens etwa 200 000 bis 300 000 km erreicht werden. Die erfindungsgemäße Bremseinheit kann über ihre ganze Lebensdauer korrosionsfrei betrieben werden, obwohl freier Kohlenstoff, bspw. im Material der Bremsscheibe, vorhanden ist.

Die folgende Tabelle veranschaulicht die Ergebnisse von Prüfstandversuchen mit der beschriebenen Bremseinheit.

| Simulierte Beanspruchung | Gemessene Laufleistung (km) |
|---|---|
| Kollektiv-Blockverschleiß | 15.583 |
| AK-Standard | 3.100 |
| Hochgeschwindigkeits-Bremsungen | 26.200 |
| Summe | 44.883 |

Mit einem gemessenen Scheibenverschleiß von 0,19 mm und einem zulässigen Scheibenverschleiß von 2,6 mm (alter Wert für eine belüftete VR-Scheibe) ergibt dies eine Laufleistung von 44.883×(2,6÷0,19) = 615 000 km.

Mit einem gemessenen Scheibenverschleiß von 0,19 mm und einem zulässigen Scheibenverschleiß von 2,0 mm (neuer Wert für eine belüftete VR-Scheibe) ergibt dies eine Laufleistung von 44.883x(2,0÷0,19) = 473 000 km. Dies liegt weit über den Laufleistungen konventioneller Bremseinheiten.

## Patentansprüche

1. Bremseinheit aus mindestens einer Bremse und mindestens einer Bremsbacke (40) mit mindestens einem Reibbelag (41), wobei die Bremse (10) eine Bremsscheibe (11) mit einem Bremsscheibenrotor (12) aus einem kohlefaserverstärkten Silizium-Keramik-Verbund-Werkstoff auf der Basis von Siliziumcarbid (CMC) enthält, dessen äußere Fläche bzw. Flächen zumindest teilweise eine Reibfläche (13) für den mindestens einen Reibbelag (41) bilden, und einen Bremsscheibentopf (20) aufweist, welcher mittels einem oder mehreren Befestigungselementen (30) an der Bremsscheibe befestigt ist,
**dadurch gekennzeichnet,**
• **dass** Verstärkungsfasern im Siliziumkarbid-Keramik-Werkstoff als isotrop orientierte Kurzfasern ausgestaltet sind,
• **dass** die Reibfläche (13) der Bremsscheibe (11) eine Härte von 1600 bis 2500 HV 0,5 aufweist
• der Reibbelag ein wärmebehandelter Reibbelag mit organischer Bindung ist,
• **dass** der mindestens eine Reibbelag (41) einen Reibwert von 0,3 bis 0,5 aufweist und
• der Bremsscheibentopf aus einem anodisierten Aluminium besteht,
• und **dass** die Befestigungselemente (30) ganz oder teilweise aus einem restfreien Material ausgebildet sind, so dass eine korrosionsinhibierende Anbindung zur Bremsscheibe (10) besteht.

2. Bremseinheit nach Anspruch 1,
**dadurch gekennzeichnet,**
**daß** die Reibfläche (13) des Bremsscheibenrotors (12) eine Oberflächenrauhigkeit Rz von etwa 2 bis 15 µm aufweist.

3. Bremseinheit nach einem der vorhergehenden Ansprüche,
**dadurch gekennzeichnet,**
**daß** die Reibfläche (13) des Bremsscheibenrotors (12) und der Bremsscheibenrotor (12) einstückig ausgebildet
sind und aus demselben Material bestehen.

4. Bremseinheit nach einem der vorhergehenden Ansprüche,
**dadurch gekennzeichnet,**
**daß** die ganze Bremsscheibe (11) einstückig ausgebildet ist und aus einem einzigen Material besteht.

5. Bremseinheit nach einem der vorhergehenden Ansprüche,
**dadurch gekennzeichnet,**
**daß** eine korrosionsinhibierende Anbindung zwischen Bremsscheibentopf (20) und Bremsscheibe (11) **dadurch** bewirkt ist,
**daß** die Befestigungselemente (30) ganz oder teilweise aus V2A-Stahl gebildet sind.

6. Bremseinheit nach Anspruch 5,
**dadurch gekennzeichnet,**
**daß** die Befestigungselemente (30) als axiale Scheibensicherungselemente (31) in Form von Schrauben, Nieten, Stiften ausgebildet sind.

7. Bremseinheit nach Anspruch 6,
**dadurch gekennzeichnet,**
**daß** der Bremsscheibentopf (20) ein röhrenförmiges Befestigungssegment (21) aufweist, welches in entsprechende in der Bremsscheibe (10) vorgesehene Aufnahmebohrungen (14) eingesteckt ist und die axialen Scheibensicherungselemente (31) aufnimmt.

8. Bremseinheit nach einem der Ansprüche 6 oder 7,
**dadurch gekennzeichnet,**
**daß** die axialen Scheibensicherungselemente (31) ferner Unterlegscheiben (32) aus einem rostfreien Material, bspw. V2A-Stahl, anodisiertem Aluminium, hochlegiertem, schmiedbarem Nirostastahl, faserverstärkter Keramik oder faserverstärktem Glas enthalten.

9. Bremseinheit nach einem der Ansprüche 7 oder 8,
**dadurch gekennzeichnet,**
**daß** die Aufnahmebohrungen (14) mit wärmedämmenden Hülsen (15), aus Keramik, faserverstärkter Keramik, Kunststoff, faserverstärktem Kunststoff oder faserverstärktem Glas ausgekleidet sind.

## Claims

1. Brake unit composed of at least one brake and at least one brake calliper (40) having at least one friction lining (41), wherein the brake (10) contains a brake disc (11) with a brake disc rotor (12) made of a carbon-fibre-reinforced silicon ceramic composite material (CMC) based on silicon carbide whose outer face or faces at least partially form a friction face (13) for the at least one friction lining (41), and has a brake disc pot (20) which is attached to the brake disc by means of one or more attachment elements (30), **characterized in that**
• reinforcement fibres are formed in the silicon carbide ceramic material as isotropically oriented short fibres,
• the friction face (13) of the brake disc (11) has a hardness of 1600 to 2500 HV 0.5,
• the friction lining is a heat-treated friction lining with an organic binding,
• the at least one friction lining (41) has a friction value of 0.3 to 0.5 and
• the brake disc pot is composed of an anodized aluminium,
• and **in that** the attachment elements (30) are embodied entirely or partially from a rust-free material so that there is a corrosion-inhibiting connection to the brake disc (10).

2. Brake unit according to Claim 1, **characterized in that** the friction face (13) of the brake disc rotor (12) has a surface roughness Rz of approximately 2 to 15 µm.

3. Brake unit according to either of the preceding claims, **characterized in that** the friction face (13) of the brake disc rotor (12) and the brake disc rotor (12) are embodied in one piece and are composed of the same material.

4. Brake unit according to one of the preceding claims**, characterized in that** the entire brake disc (11) is embodied in one piece and is composed of a single material.

5. Brake unit according to one of the preceding claims, **characterized in that** a corrosion-inhibiting connection between the brake disc pot (20) and brake disc (11) is brought about by the fact that the attachment elements (30) are formed entirely or partially from V2A steel.

6. Brake unit according to Claim 5, **characterized in that** the attachment elements (30) are embodied as axial disc-securing elements (31) in the form of screws, rivets, pins.

7. Brake unit according to Claim 6, **characterized in that** the brake disc pot (20) has a tubular attachment segment (21) which is plugged into corresponding receptacle bores (14) provided in the brake disc (11) and holds the axial disc-securing elements (31).

8. Brake unit according to either of Claims 6 and 7, **characterized in that** the axial disc-securing elements (31) also contain washers (32) made from rust-free material, for example V2A steel, anodized aluminium, high-alloy forgeable stainless steel, fibre-reinforced ceramic or fibre-reinforced glass.

9. Brake unit according to either of Claims 7 and 8, **characterized in that** the receptacle bores (14) are lined with heat-absorbing sleeves (15) made of ceramic, fibre-reinforced ceramic, plastic, fibre-reinforced plastic or fibre-reinforced glass.

## Revendications

1. Unité de frein se composant d'au moins un frein et d'au moins une mâchoire de frein (40) avec au moins une garniture de friction (41), sachant que le frein (10) comprend un disque de frein (11) avec un rotor de disque de frein (12) en composite céramique de silicium (CMC) basé sur le carbure de silicium et renforcé par des fibres de carbone, dont la ou les surfaces extérieures forment, au moins partiellement, une surface de friction (13) pour la au moins une garniture de friction (41), et présente une cuvette de disque de frein (20) laquelle est fixée au disque de frein à l'aide d'un ou de plusieurs éléments de fixation (30), **caractérisée en ce que**
* les fibres de renforcement sont réalisées en matériau céramique-carbure de silicium en tant que fibres courtes orientées de manière isotrope,
* la surface de friction (13) du disque de frein (11) a une dureté de 1600 à 2500 HV 0,5,
* la garniture de friction est une garniture de friction ayant subi un traitement thermique et avec un liant organique,
* la au moins une garniture de friction (41) a un coefficient de friction de 0.3 à 0.5 et
* la cuvette de disque de frein est réalisée en aluminium anodisé,
* et **en ce que** les éléments de fixation (30) sont composés totalement ou partiellement d'un matériau inoxydable de sorte qu'il y ait une liaison empêchant la corrosion avec le disque de frein (10).

2. Unité de frein selon la revendication 1, **caractérisée en ce que** la surface de friction (13) du rotor de disque de frein (12) présente une rugosité de surface Rz d'environ 2 à 15 µm.

3. Unité de frein suivant l'une quelconque des revendications précédentes **caractérisée en ce que** la surface de friction (13) du rotor de disque de frein (12) et le rotor de disque de frein (12) sont réalisés en une seule pièce et sont composés du même matériau.

4. Unité de frein suivant l'une quelconque des revendications précédentes **caractérisée en ce que** l'ensemble du disque de frein (11) est réalisé en une seule pièce et est composé d'un seul matériau.

5. Unité de frein suivant l'une quelconque des revendications précédentes **caractérisée en ce qu'**une liaison empêchant la corrosion entre la cuvette de disque de frein (20) et le disque de frein (11) est réalisée de sorte que les éléments de fixation (30) sont formés totalement ou partiellement en acier V2A.

6. Unité de frein selon la revendication 5, **caractérisée en ce que** les éléments de fixation (30) sont réalisés en tant qu'éléments de blocage de disque (31) sous la forme de vis, de rivets, de goupilles.

7. Unité de frein selon la revendication 6, **caractérisée en ce que** la cuvette de disque de frein (20) présente un segment de fixation (21) de forme tubulaire, lequel segment est enfiché dans des trous de logement (14) respectifs pratiqués dans le disque de frein (11) et accueille les éléments axiaux de blocage de disque (31).

8. Unité de frein selon la revendication 6 ou 7, **caractérisée en que** les éléments axiaux de blocage de disque (31) comprennent en outre des rondelles (32) en matériau inoxydable, par exemple de l'acier V2A, de l'aluminium anodisé, de l'acier Nirosta fortement allié et malléable, de la céramique renforcée par des fibres ou du verre renforcé par des fibres.

9. Unité de frein selon la revendication 7 ou 8, **caractérisée en ce que** les trous de logement (14) sont revêtus par des douilles isolantes thermiquement (15) en céramique, en céramique renforcée par des fibres, en plastique, en plastique renforcé par des fibres ou en verre renforcé par des fibres.
